# EUROPEAN PATENT SPECIFICATION

(11) **EP 4 480 723 B1**
(45) Date of publication and mention of the grant of the patent: **29.10.2025**
(21) Application number: 24181523.2
(22) Date of filing: 11.06.2024
(51) Int. Cl.: B60H 1/00, F25D 17/06, F25D 29/00, B60H 1/32, F25D 11/00, F25D 21/00, F25D 27/00

(54) **AIR CONDITIONING AND REFRIGERATION SYSTEM AND METHOD FOR CONTAINER EQUIPPED WITH A TRANSPORT REFRIGERATION UNIT**
KLIMATISIERUNGS- UND KÜHLSYSTEM UND -VERFAHREN FÜR EINEN MIT EINER TRANSPORTKÜHLEINHEIT AUSGESTATTETEN BEHÄLTER
SYSTÈME DE CLIMATISATION ET DE RÉFRIGÉRATION ET PROCÉDÉ POUR CONTENEUR ÉQUIPÉ D'UNE UNITÉ DE RÉFRIGÉRATION DE TRANSPORT

(30) Priority: 19.06.2023 US 202363508947 P
(43) Date of publication of application: 25.12.2024
(73) Proprietor: Carrier Corporation, Palm Beach Gardens, FL 33418 (US)
(72) Inventor: Beaufrere, Florian, Rouen 76520 (FR)
(74) Representative: Dehns

(56) References cited:
- WO-A1-2011/094099
- US-B2- 10 696 139

## Description

### BACKGROUND

This invention relates to transport refrigeration units, and more particularly, to an air conditioning and refrigeration system for a container equipped with a transport refrigeration unit, and a method thereof.

Trailer refrigeration units (TRUs) may be employed in a container or trailer of vehicles to supply conditioned air within the container to maintain a conditioned environment inside the container. The storage space or environment inside the container may be conditioned based on the products being stored or transported in the container. However, the TRU may not be able to effectively monitor the environment of the entire storage space and further fail to sufficiently supply conditioned air throughout the container, especially towards a rear section of the container. As a result, the environment inside the container may not be homogeneously conditioned as per product compliance. US 10 696 139 B2 describes a state of the art refrigerated container system, with a fan for the heat absorption exchanger, without mentioning sensors outside the refrigeration unit and container.

### SUMMARY

According to a first aspect of the invention there is provided an air conditioning and refrigeration system for a container equipped with a transport refrigeration unit (TRU). The system comprises a variable speed fan configured with the TRU, one or more first sensors positioned at predefined positions at a rear section of a conservation space associated with the container, the one or more first sensors are configured to monitor one or more first attributes associated with the rear section, and a controller in communication with the one or more first sensors and the fan, wherein the controller is configured to adjust speed of the fan and/or adjust cooling capacity of the TRU based on the monitored first attributes of the rear section, to maintain a predefined environment at the rear section or across the conservation space.

Optionally, the system comprises one or more second sensors in communication with the controller and is configured to monitor one or more second attributes associated with one or more of return air received at a return air inlet port of the TRU and ambient air received at an ambient air inlet port of the TRU.

Optionally, the controller is configured to adjust the speed of the fan and/or cooling capacity of the TRU based on the monitored first attributes of the rear section and the monitored second attributes of the return air and/or the return air, to maintain the predefined environment across the conservation space.

Optionally, the controller is operatively coupled to a vapor compression system associated with the TRU, wherein the controller controls the operation of the vapor compression system to adjust the cooling capacity of the TRU.

Optionally, the one or more first and second attributes comprise one or more of temperature, humidity, and airflow rate, wherein the predefined environment comprises one or more of a predefined temperature range, a predefined humidity range, and a predefined airflow speed range.

Optionally, when the monitored temperature of the rear section exceeds the predefined temperature range and the monitored temperature of the return air and/or the return air is within the predefined temperature range, the controller is configured to increase the speed of the fan and/or adjust the cooling capacity of the TRU to maintain the predefined temperature range at the rear section.

Optionally, when the monitored temperature of the return air and/or the return air is within the predefined temperature range and/or the monitored temperature of the rear section is within the predefined temperature range, the controller is configured to maintain the cooling capacity of the TRU and maintain the speed of the fan to maintain the predefined temperature range across the conservation space.

Optionally, the one or more first sensors are installed over and/or within one or more boxes storing one or more products at the rear section of the container.

Optionally, the one or more first sensors are installed on an inner wall of the container at the rear section and/or disposed of in the conservation space.

Optionally, the controller is a control unit of the TRU.

Optionally, the controller is in communication with a control unit of the TRU.

Optionally, the container is a trailer associated with a vehicle, wherein the vehicle is one or more of an electric truck, a semi-electric truck, and a non-electric truck.

Optionally, the fan and the TRU are operatively coupled to an AC power source or a DC power source associated with the vehicle.

Optionally, the system comprises one or more third sensors positioned at a front section and a middle section of the storage space, wherein the one or more first sensors and the one or more third sensors monitor are configured to monitor the first attributes associated with the entire storage space

According to a second aspect of the invention there is provided a method for conditioning a conservation space of a container equipped with a transport refrigeration unit (TRU). The method comprises the steps of monitoring, by one or more first sensors, one or more first attributes associated with a rear section of the conservation space, and adjusting, by a controller, speed of a variable speed fan configured with the TRU and/or adjusting cooling capacity of the TRU based on the monitored first attributes of the rear section, to maintain a predefined environment at the rear section or across the conservation space.

Optionally, the method comprises the steps of monitoring, by one or more second sensors, one or more second attributes associated with one or more of a return air received at a return air inlet port of the TRU and ambient air received at an ambient air inlet port of the TRU, and adjusting, by the controller, speed of the fan and/or cooling capacity of the TRU based on the monitored first attributes of the rear section and the monitored second attributes of the return air and/or the ambient air, to maintain the predefined environment across the conservation space.

Optionally, the controller is operatively coupled to a vapor compression system associated with the TRU, wherein the method comprises the step of controlling, by the controller, the operation of the vapor compression system to adjust the cooling capacity of the TRU.

Optionally, the one or more first and second attributes comprise one or more of temperature, humidity, and airflow rate, wherein the predefined environment comprises one or more of a predefined temperature range, a predefined humidity range, and a predefined airflow speed range.

Optionally, the method comprises the steps of monitoring, by one or more third sensors positioned at a front section and a middle section of the storage space, the first attributes associated with the front section and the middle section of the storage space

Optionally, when the monitored temperature of the rear section exceeds the predefined temperature range and the monitored temperature of the return air and/or the ambient air is within the predefined temperature range, the method comprises the steps of increasing the speed of the fan and/or adjusting the cooling capacity of the TRU to maintain the predefined temperature range at the rear section.

Optionally, when the monitored temperature of the return air and/or the ambient air is within the predefined temperature range and/or the monitored temperature of the rear section is within the predefined temperature range, the method comprises the steps of maintaining the cooling capacity of the TRU and maintaining the speed of the fan to maintain the predefined temperature range across the conservation space.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention by way of example only and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A and 1B show an air conditioning and refrigeration system "system" for a container equipped with a transport refrigeration unit (TRU).
FIG. 2 shows a block diagram of the system of FIGs. 1A and 1B.
FIG. 3A shows a method for conditioning a conservation space of a container equipped with TRU.
FIG. 3B shows a flow diagram depicting the control strategy of the controller of FIGs. 1A to 2.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications and alternatives falling within the scope of the invention as set out in the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the disclosure, the components of this invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

Trailer refrigeration units (TRUs) may be employed in a container or trailer of vehicles to supply conditioned air within the container for maintaining a conditioned environment inside the storage space of the container. Various products including but not limited to pharmaceutical and nutraceutical products, and perishable items such as foods and beverages may be stored and transported in containers equipped with the TRU. These products are to be maintained at a specific temperature and/or humidity while transportation to keep them in a healthy condition and comply with product compliance regulations. Accordingly, based on the products being stored or transported in the container, the cooling capacity of the TRU may be adjusted to supply conditioned air within the storage space for maintaining the conditioned environment inside the storage space. However, the TRU may not be able to effectively monitor the environment of the entire storage space and further fail to sufficiently supply conditioned air throughout the storage space, especially towards a rear section of the container. As a result, the environment inside the container may not be homogeneously conditioned as per product compliance regulations, which may affect the stored products. There is therefore a need to maintain a homogenous and conditioned environment throughout the storage space in the container as per product compliance regulations.

This invention overcomes the above-mentioned shortcomings and limitations associated with the existing containers equipped with TRUs, by providing an improved, automated, cost-effective, and efficient air conditioning and refrigeration system and method for containers equipped with a TRU, which effectively monitors the environment of the entire storage space of the container and further maintains a homogenous and conditioned environment throughout the storage space as well as at the rear section of the container.

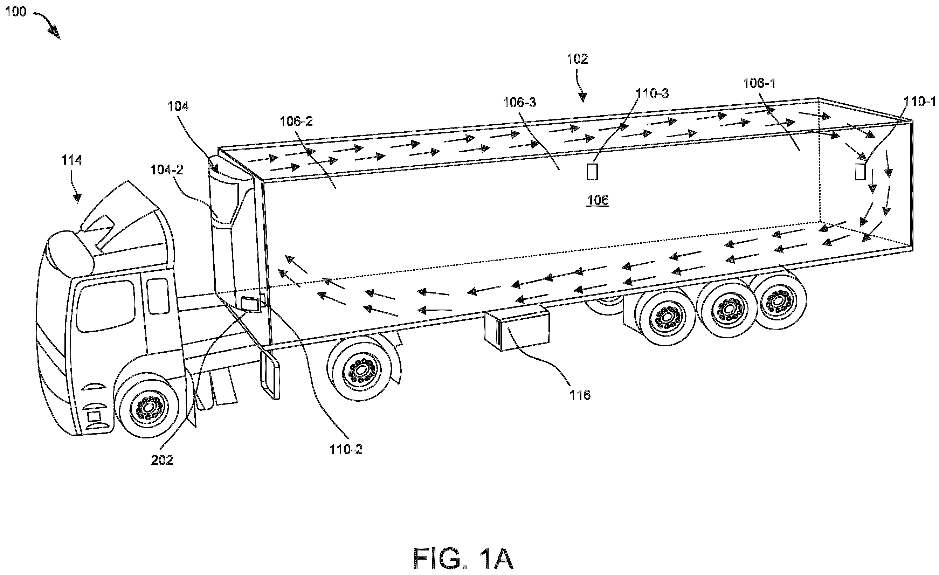

Referring to FIGs. 1A to 2, an air conditioning and refrigeration system "system" 100 for a container (trailer) 102 equipped with a transport refrigeration unit (TRU) 104 is disclosed, which may be configured to maintain a predefined homogenous environment across an entire enclosed (storage or conservation) space 106, including a rear section 106-1, associated with the container/trailer 102. Various products including but not limited to pharmaceutical and nutraceutical products, and perishable items such as foods and beverages may be stored and transported in container/trailer 102. The system 100 may keep these products may be maintained at a specific temperature and/or humidity while transportation to keep them in a healthy condition and comply with product compliance regulations.

The TRU 104 may be installed on the container/trailer 102 associated with one or more vehicles including one or more of an electric truck, a semi-electric truck, and a non-electric truck such that the TRU 104 remains fluidically connected to the ambient and further gets fluidically connected to the storage space 106 of the container/trailer 102. The TRU 104 may include a housing having a return air inlet port 104-1, an ambient air inlet port 104-2, and an air outlet port 104-3. The return air inlet port 104-1 may be fluidically connected to storage space 106 to receive return air and the ambient air inlet port 104-2 may be fluidically connected to ambient to receive ambient (outside) air. Further, the air outlet port 104-3 of the TRU 104 may be fluidically connected to the storage space 106 of the container/trailer 102.

In one or more embodiments, based on the predetermined environment to be maintained in the storage space 106 or as per product compliance regulations, the TRU 104 may be operated to ingress the return air via the return inlet port 104-1 and/or ambient air via the ambient air inlet port 104-2 and degrees air (also referred to as exhaust air) into the storage space 106 (at a higher or lower temperature compared to the ingressed air (ambient air and/or return air) via the outlet port 104-3. For instance, the exhaust air from the TRU 104 may be warmer or hotter than the ingressed air (ambient air and/or return air) such that the TRU 104 may be employed to supply warm or hot air in the storage space 106 of the container/trailer 102 to maintain the predetermined environment. In another instance, the exhaust air from the TRU 104 may be cooler than the received air such that the TRU 104 may be employed to supply cool air in the container 102 to maintain the predetermined environment. The detailed construction and operation of the TRU 104 have been explained in subsequent paragraphs.

The system 100 may include a variable-speed fan 108 configured with or within the TRU 104, which may control the ingress of the return airflow into the TRU 104 via the return inlet port 104-1 or ambient airflow into the TRU 104 via the ambient inlet port 104-2 and further control the flow of conditioned exhaust air into the storage space 106 of the container 102 via the outlet port 104-3. The system 100 may further include one or more first sensors 110-1 positioned at predefined positions at the rear section 106-1 of the storage (conservation) space 106 associated with the container 102. The first sensors 110-1 may be positioned at the bottom, middle and upper regions of the rear section 106-1 of the storage space 106. The first sensors 110-1 may be configured to monitor one or more first attributes associated with the rear section 106-1 of the storage space 106. In addition, in some embodiments, additional sensors may be positioned throughout the conservation space 106. For instance, one or more second sensors 110-2 such as a return air sensor (RAT) may be positioned within the container 102 or TRU 104 at the return air inlet port 104-1 of the TRU 104 to monitor second attributes associated with the return air being received by the TRU 104 and a supply air temperature (SAT) (not shown) may be positioned outside of the container 102 or TRU 104 at the ambient air inlet port 104-2 to monitor second attributes associated with the outside (ambient) air being received by the TRU 104. Further, third sensors 110-3 may be positioned at the front and/or middle sections 106-2, 106-3 of the storage space 106, such that the first sensors 110-1 and the third sensors 110-3 may effectively monitor the first attributes associated with the entire storage space 106. The third sensors 110-3 may be positioned at the bottom, middle and upper regions of the front section and middle section of the storage space 106. As the third sensors may 110-3 not be effective in monitoring the entire storage space 106, however, it is to be appreciated that the first sensors 110-1 may enable the system 110 to monitor the environment of the entire storage space 106. Moreover, the monitoring of control temperature (i.e., the temperature of the return air or outside/ambient air) by second sensors 110-2 may enable the system 100 to restrict overcooling or overheating of the front or middle sections 106-2, 106-3 of the storage space 106 while maintaining the predetermined environment at the rear section 106-1 of the storage space 106.

In one or more embodiments, the first and second attributes may include one or more of temperature, humidity, and airflow rate, but is not limited to the like. Further, the predefined environment may include one or more of a predefined temperature range, a predefined humidity range, and a predefined airflow speed range, but is not limited to the like, to be maintained in the storage space 106.

The system 100 may further include a controller 202 in communication with the first sensors 110-1, the second sensors 110-2, the third sensors 110-3, a vapor compression system 112 of the TRU 104, and the variable speed fan 108. In one or more embodiments, the controller 202 may be a control unit of the TRU 104. In other embodiments, the controller 202 may be in communication with a control unit of the TRU 104. The first sensors 110-1, the second sensors 110-2, and the third sensors 110-3 may be wireless sensors and/or wired sensors that may be connected to the controller 202 by wired or wireless media. The controller 202 may be configured to adjust the speed of the fan 108 and/or cooling capacity of the TRU 104 based on the monitored first attributes of the rear section 106-1 and the monitored second attributes (or control temperature) of the return air and/or the outside (ambient) air, to maintain the predefined environment across the entire storage space 106.

In one or more embodiments, when the monitored temperature of the rear section 106-1 exceeds the predefined temperature range and the control temperature (temperature of the return air and/or the ambient air) is detected to be within the predefined temperature range, the controller 202 may be configured to increase the speed of the fan 108 and/or operate the vapor compression system 112 to adjust the cooling capacity of the TRU 104 in order to maintain the predefined temperature range at the rear section 106-1, thereby creating a homogenous predetermined environment in the entire storage space 106.

In other embodiments, when the control temperature (temperature of the return air and/or the ambient air) is detected to be within the predefined temperature range and/or the monitored temperature of the rear section 106-1 is detected to be within the predefined temperature range, the controller 202 may be configured to maintain the same cooling capacity of the TRU 104 and further maintain the speed of the fan 108 to maintain the predefined temperature range across the storage space 106.

In an example, the predefined temperature range to be maintained in the rear section 106-1 of the storage space 106 may be set as 5°C±2°C, where the set point temperature may be 5°C with a tolerance of 2°C. Further, the control temperature detected by the second sensors 110-2 may be 4°C. Furthermore, if the temperature of the rear section 106-1 is detected (by the first sensors 110-1) to be 5°C, controller 202 may identify a gap of 3°C between the detected temperature and the predefined temperature range of the rear section 106-1 as the tolerance is ±2°C. Accordingly, the controller 202 may increase the speed of the fan 108 and/or operate the vapor compression system 112 to increase the cooling capacity of the TRU 104 in order to maintain the predefined temperature range (5°C) in the rear section 106-1.

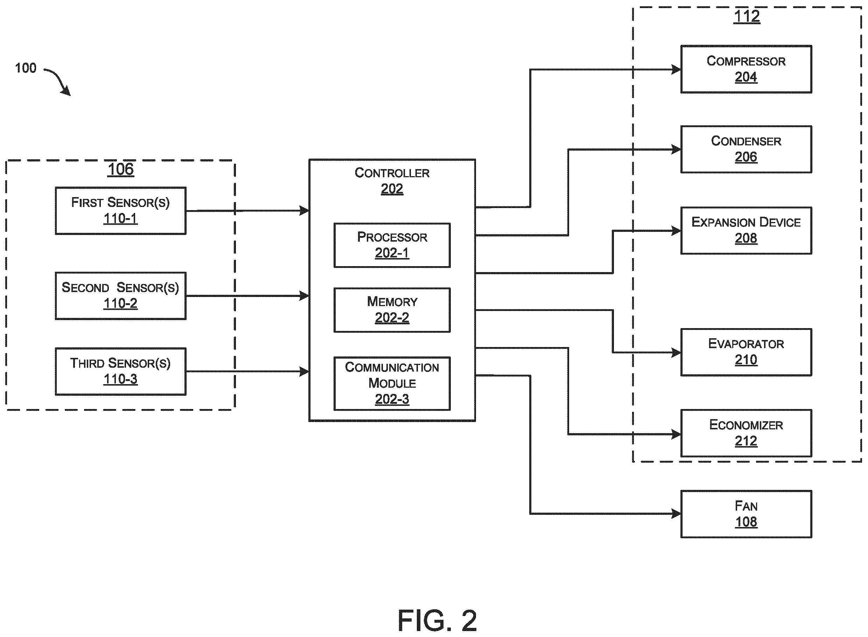

Referring to FIG. 2, the controller 202 can include a processor 202-1 coupled to a memory 202-2 storing instructions executable by the processor 202-1 to enable the controller 202 to perform one or more designated operations. The memory 202-2 of the controller 202 may contain predefined values for various operating parameters or attributes to be maintained within the container 102 or the space 106. The parameters and attributes may include but are not limited to, temperature set points for various locations within the container 102 or the space 106, pressure limits, current limits, engine speed limits, and any variety of other desired operating parameters or limits with the TRU 104.

The controller 202 may control the operation of the vapor compression system 112 of the TRU 104 to adjust the cooling capacity of the TRU 104 based on the predetermined environment to be maintained in the storage space 106. In one or more embodiments, the vapor compression system 112 may comprise a compressor 204, a condenser 206 configured downstream of the compressor 204, an expansion device 208 configured downstream of the condenser 206, and an evaporator 210 configured downstream of the expansion device 208, enclosed within the housing of the TRU 104 having the inlet port 104-1 and the outlet port 105-2. In addition, an outlet of the compressor 204 may be fluidically connected to the condenser 206. In one or more embodiments, the compressor 204 may be a variable-speed scroll compressor, however, other compressors such as reciprocating or screw compressors are possible without limiting the scope of the invention. A motor (not shown) may be used to drive the compressor 204. For example, a motor can be an integrated electric drive motor driven by a synchronous generator, a commercial power service an external power generation system (e.g., shipboard), a generator or the like. The compressor 204 may also be a multi-stage compression device.

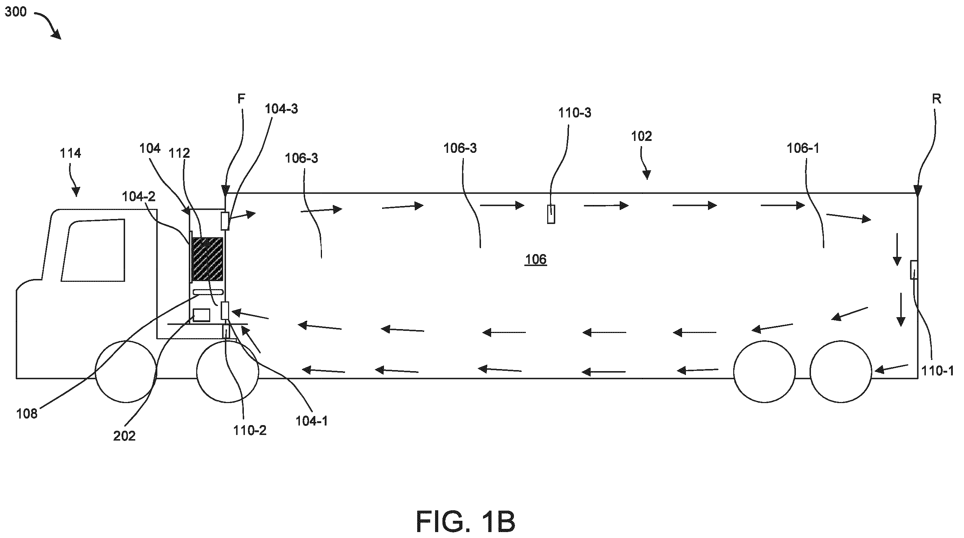

In one or more embodiments, referring back to FIGs. 1A and 1B, the TRU 104 may be coupled to the front end (F) of the container/trailer 102. The air outlet port 104-3 of the TRU may be in fluidic communication with the storage space 106 of the container/trailer 102, the return inlet port 104-1 may be in fluidic communication with the storage space 106, and the ambient inlet port 104-2 may be in fluidic communication with ambient. Further, the trailer 102 may be coupled to a rear end of a cab or truck 114 such that a gap remains therebetween. The TRU 104 may be coupled to the front end (F) of the container/trailer 102 in the gap area between the cab 114 and container/trailer 102. Alternatively, in one or more embodiments, the TRU 104 may be coupled to a prescribed position on a side or more than one side of the container/trailer 102. Moreover, a plurality of TRUs 104 can be coupled to a single container/trailer 102. Alternatively, a single TRU 104 can be coupled to a plurality of container/trailers 102.

In one or more embodiments, referring back to FIG. 2, in a cooling mode or cooling cycle (i.e., when the cooling capacity of the TRU 104 is to be increased), the TRU 104 may circulate the refrigerant from the compressor 204 to the condenser 206, through the expansion device 208 and the evaporator 210, and then return to the compressor 204. high-temperature, highpressure refrigerant vapor exiting the outlet of the compressor 204 may move to the condenser 206 that may include a plurality of condenser coils, which may receive air blown by a condenser 206 fan 108 (not shown). The condenser 206 may facilitate heat exchange between the refrigerant flowing within the condenser 206 coils and the received air to remove latent heat through the condenser 206, which may condense the refrigerant to a high-pressure/high-temperature liquid within the condenser 206 coils. The high-pressure/high-temperature liquid refrigerant may flow to a receiver that may provide storage for excess liquid refrigerant during low-temperature operations. Further, from the receiver, the refrigerant may flow to a filter drier which may keep the refrigerant clean and dry.

The TRU 104 or vapor compression system 112 may further include an economizer 212 fluidically configured between the compressor 204, the receiver, the evaporator 210, and the condenser 206. In one or more embodiments, the expansion device 208 may be an electronic evaporator expansion valve (EVXV). The economizer 212 may increase the refrigerant subcooling. When the economizer 212 is active, an injection solenoid valve associated with the economizer 212 may open to allow refrigerant to pass through an auxiliary expansion valve having a sensing bulb located upstream of an intermediate inlet port of the compressor 204. The injection solenoid valve may be controlled, responsive to the temperature measured at the bulb, and serve to expand and cool the refrigerant that proceeds into an economizer counter-flow heat exchanger that may additionally sub-cool the liquid refrigerant.

The refrigerant may flow from the economizer heat exchanger of the economizer 212 to the EVXV 208. As the liquid refrigerant passes through the orifice of the EVXV 208, at least some of the liquid refrigerant may vaporize. The vaporized refrigerant may then enter the evaporator 210 via the distributor and then flow through the evaporator coils of the evaporator 210. The evaporator 210 may absorb heat from the air (e.g., return air returning from the storage space 106 or the outside/ambient air) to vaporize some or all of the remaining liquid refrigerant in the evaporator 210. The air may preferably be drawn or pushed across the evaporator coils by the fan 108. The refrigerant vapor may be drawn from the evaporator 210 through a suction service valve back into the compressor 204 via an accumulator that may store any excess refrigerant. Further, a heat exchanger may be additionally configured in the TRU 104 to facilitate heat transfer from a warm refrigerant supplied by the condenser 206 or the sub-cooled liquid from the economizer's heat exchanger to the cold refrigerant supplied by the evaporator 210 during the cooling cycle. Further, the variable speed fan 108 may enable (increase or decrease) the flow of the air (ambient air and/or return air) through the TRU 104 while passing the air across the cold refrigerant-carrying evaporator coils to cool the air and further supply the cool exhaust air into the storage space 106 via the outlet port 104-3, thereby maintaining the predetermined environment within the entire storage space 106 of the container/trailer 102.

In one or more embodiments, the controller 202 can include a communication module 202-3 that can operatively couple the controller 202 to the first sensors 110-1, the second sensors 110-2, the third sensors 110-3, the vapor compression system 112 of the TRU 104, and the variable speed fan 108, and further enable the controller 202 to receive temperature inputs, pressure inputs, and humidity levels from various points in the storage space 106. In addition, the controller 202 can include an actuator, drive circuit, and relays to receive signals or current from the controller 202 and in turn control various internal components of the TRU 104, the fan 108, the vapor compression system 112 as well as external or peripheral devices in the TRU 104.

In one or more embodiments, the fan 108 and the TRU 104 may be operatively coupled to an AC power source or a DC power source (collectively designated as 116, herein) associated with the vehicle. The controller 202 may control the operation of the fan 108 and the vapor compression system 112 of the TRU 104 based on the available electrical power while maintaining the predetermined environment in the storage space 106. In one or more embodiments, when the controller 202 calculates the available electrical power to go below a predefined level after a predefined time, which may affect maintaining the predetermined environment in the storage space 106 after the predefined time, the controller 202 may accordingly transmit an alert signal to mobile devices associated with a user of the vehicle or a human-machine interface (HMI) installed in the vehicle. The alert signal may be indicative of a request for charging the power source of the vehicle and/or electrically connecting the TRU 104 and the system to an external power source.

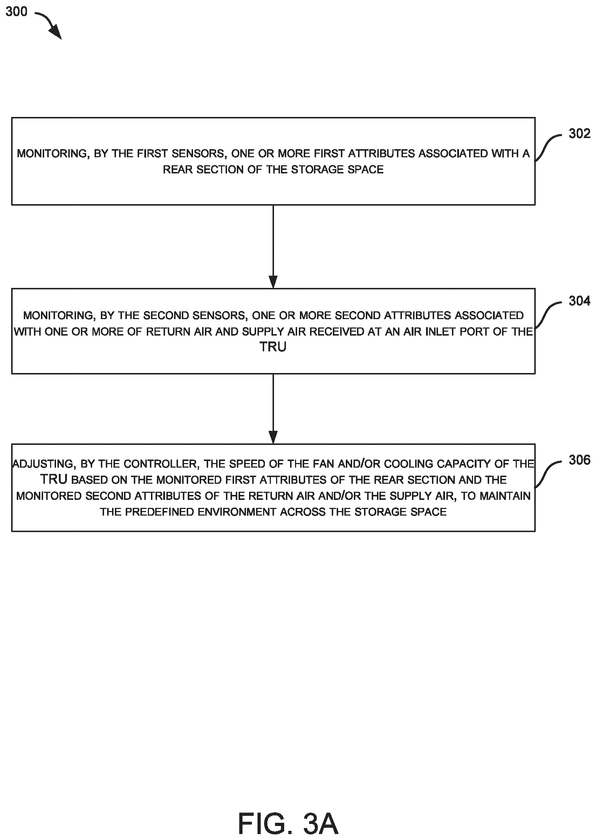

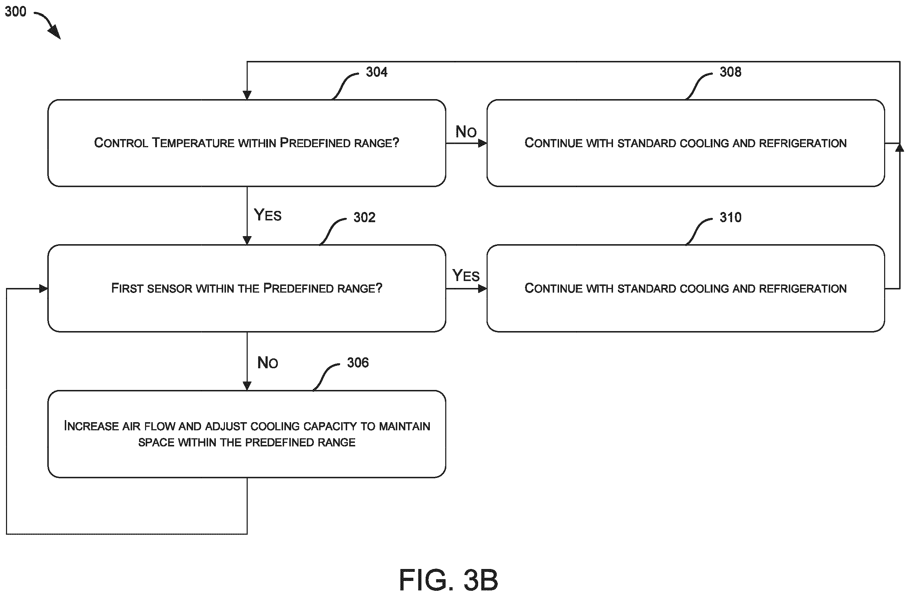

Referring to FIG. 3A, method 300 for conditioning a storage space of a container/trailer equipped with a transport refrigeration unit (TRU) is disclosed. Further, referring to FIG. 3B, an exemplary flow diagram depicting the control strategy of the controller is disclosed. Method 300 may involve the first sensors 110-1, the second sensors 110-2, the third sensors 110-3, the vapor compression system 112 of the TRU 104, and the variable speed fan 108. Method 300 may include step 302 of monitoring, by the first sensors, one or more first attributes associated with a rear section of the storage space. Further, method 300 may include step 304 of monitoring, by the second sensors, one or more second attributes associated with one or more of the return air, and the ambient air received at a return air inlet port and an ambient air inlet port, respectively, of the TRU.

In one or more embodiments, method 300 may include the steps of positioning one or more third sensors at a front section and a middle section of the storage space. The third sensors may be configured to monitor the first attributes associated with the front section and the middle section of the storage space.

Method 300 may further include step 306 of adjusting, by the controller, the speed of the fan and/or cooling capacity of the TRU based on the monitored first attributes of the rear section and the monitored second attributes of the return air and/or the ambient air, to maintain the predefined environment across the storage space. In one or more embodiments, the method of adjusting the cooling capacity of the TRU may comprise the step of controlling, by the controller, the operation of the vapor compression system associated with the TRU to adjust the cooling capacity of the TRU.

In one or more embodiments, when the control temperature (temperature of the return air and/or the ambient air) is detected to be within the predefined temperature range, at step 308, the controller may maintain the same cooling capacity in the TRU and further maintain the speed of the fan to maintain the predefined temperature range across the storage space

In one or more embodiments, when the control temperature (temperature of the return air and/or the ambient air) is detected to be within the predefined temperature range and the monitored temperature of the rear section is also detected to be within the predefined temperature range, at step 310, the controller may maintain the same cooling capacity of the TRU and further maintain the same speed of the fan to maintain the predefined temperature range across the storage space.

In one or more embodiments, when the monitored temperature of the rear section exceeds the predefined temperature range and the control temperature (temperature of the return air and/or the ambient air) is detected to be within the predefined temperature range, at step 306, the controller may increase the speed of the fan and adjust the cooling capacity of the TRU to maintain the predefined temperature range at the rear section of the storage space.

Thus, this invention overcomes the drawbacks, and limitations associated with the existing containers/trailers equipped with TRU, by providing an improved, automated, cost-effective, and efficient air conditioning and refrigeration system for containers equipped with a TRU. The invention effectively monitors the environment of the entire storage space of the container including the rear section of the storage space and further maintains a homogenous and conditioned environment throughout the storage space, thereby keeping the stored products healthy and meeting the product compliance regulations.

The use of the term "homogenous environment" refers to a conditioned environment within the storage space 106 where the temperature, humidity, and/or other environmental conditions associated with the storage space 106 may be a numerical value having a variation less than or equal to ±10% of the numerical value, expressly including any narrow range within the given range of the numerical value as well as the exact numerical value. For example, a temperature of "about" 30° C refers to a temperature from 27° C to 33° C, but also expressly includes any narrower range of temperature or even a single temperature within that range, including, for example, a temperature of exactly 30° C.

While the invention has been described with reference to exemplary embodiments, it will be understood by those skilled in the art that various changes may be made without departing from the scope of the invention as set out in the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as set out in the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. An air conditioning and refrigeration system (100) for a container (102) equipped with a transport refrigeration unit TRU (104), the system comprising:
a variable speed fan (108) configured with the TRU;
one or more first sensors (110-1) positioned at predefined positions at a rear section (106-1) of a conservation space (106) associated with the container, the one or more first sensors are configured to monitor one or more first attributes associated with the rear section; and
a controller (202) in communication with the one or more first sensors and the fan, wherein the controller is configured to adjust speed of the fan and/or adjust cooling capacity of the TRU based on the monitored first attributes of the rear section, to maintain a predefined environment at the rear section or across the conservation space.

2. The system (100) of claim 1, wherein the system comprises one or more second sensors (110-2) in communication with the controller (202) and configured to monitor one or more second attributes associated with one or more of return air received at a return air inlet port (104-1) of the TRU (104) and ambient air received at an ambient air inlet port (104-2) of the TRU,
wherein the controller is configured to adjust the speed of the fan (108) and/or cooling capacity of the TRU based on the monitored first attributes of the rear section (106-1) and the monitored second attributes of the return air and/or the ambient air, to maintain the predefined environment across the conservation space (106).

3. The system (100) of any of claims 1 and 2, wherein the controller (202) is operatively coupled to a vapor compression system (112) associated with the TRU (104), wherein the controller controls the operation of the vapor compression system to adjust the cooling capacity of the TRU.

4. The system (100) of any of claims 2 and 3, wherein the one or more first and second attributes comprise one or more of temperature, humidity, and airflow rate, wherein the predefined environment comprises one or more of a predefined temperature range, a predefined humidity range, and a predefined airflow speed range.

5. The system (100) of any preceding claim, wherein when the monitored temperature of the rear section (106-1) exceeds the predefined temperature range and the monitored temperature of the return air and/or the ambient air is within the predefined temperature range, the controller (202) is configured to increase the speed of the fan (108) and/or adjust the cooling capacity of the TRU (104) to maintain the predefined temperature range at the rear section.

6. The system (100) of any preceding claim, wherein when the monitored temperature of the return air and/or the ambient air is within the predefined temperature range and/or the monitored temperature of the rear section (106-1) is within the predefined temperature range, the controller (202) is configured to maintain the cooling capacity of the TRU (104) and maintain the speed of the fan (108) to maintain the predefined temperature range across the conservation space (106).

7. The system (100) of any preceding claim, wherein the one or more first sensors (110-1) are installed over and/or within one or more boxes storing one or more products at the rear section (106-1) of the container (102); and/or
wherein the one or more first sensors (110-1) are installed on an inner wall of the container (102) at the rear section (106-1) and/or disposed of in the conservation space (106).

8. The system (100) of any preceding claim, wherein the controller (202) is a control unit of the TRU (104); or
wherein the controller (202) is in communication with a control unit of the TRU (104).

9. The system (100) of any preceding claim, wherein the container (102) is a trailer associated with a vehicle, wherein the vehicle is one or more of an electric truck, a semi-electric truck, and a non-electric truck,
optionally wherein the fan (108) and the TRU (104) are operatively coupled to an AC power source or a DC power source (116) associated with the vehicle.

10. The system (100) of any preceding claim, wherein the system comprises one or more third sensors (110-3) positioned at a front section (106-2) and a middle section (106-3) of the conservation space (106), wherein the one or more first sensors (110-1) and the one or more third sensors monitor are configured to monitor the first attributes associated with the entire storage space.

11. A method (300) for conditioning a conservation space (106) of a container (102) equipped with a transport refrigeration unit TRU (104), the method comprising the steps of:
monitoring, by one or more first sensors (110-1), one or more first attributes associated with a rear section (106-1) of the conservation space; and
adjusting, by a controller (202), speed of a variable speed fan (108) configured with the TRU and/or adjusting cooling capacity of the TRU based on the monitored first attributes of the rear section, to maintain a predefined environment at the rear section or across the conservation space.

12. The method (300) of claim 11, wherein the method comprises the steps of:
monitoring, by one or more second sensors (110-2), one or more second attributes associated with one or more of a return air received at a return air inlet port (104-1) of the TRU (104), and ambient air received at an ambient air inlet port (104-2) of the TRU; and
adjusting, by the controller (202), speed of the fan (108) and/or cooling capacity of the TRU based on the monitored first attributes of the rear section and the monitored second attributes of the return air and/or the ambient air, to maintain the predefined environment across the conservation space (106).

13. The method (300) of any of claim 11 and 12, wherein the controller (202) is operatively coupled to a vapor compression system (112) associated with the TRU (104), wherein the method comprises the step of controlling, by the controller, the operation of the vapor compression system to adjust the cooling capacity of the TRU.

14. The method (300) of any of claims 11 to 13, wherein the method comprises the steps of monitoring, by one or more third sensors (110-3) positioned at a front section (106-2) and a middle section (106-3) of the storage space (106), the first attributes associated with the front section and the middle section of the storage space; and/or
wherein the one or more first and second attributes comprise one or more of temperature, humidity, and airflow rate, wherein the predefined environment comprises one or more of a predefined temperature range, a predefined humidity range, and a predefined airflow speed range.

15. The method (300) of any of claims 11 to 14, wherein when the monitored temperature of the rear section (106-1) exceeds the predefined temperature range and the monitored temperature of the return air and/or the ambient air is within the predefined temperature range, the method comprises the steps of increasing the speed of the fan (108) and/or adjusting the cooling capacity of the TRU (104) to maintain the predefined temperature range at the rear section; and/or
wherein when the monitored temperature of the return air and/or the ambient air is within the predefined temperature range and/or the monitored temperature of the rear section (106-1) is within the predefined temperature range, the method comprises the steps of maintaining the cooling capacity of the TRU (104) and maintaining the speed of the fan to maintain the predefined temperature range across the conservation space (106).

## Patentansprüche

1. Klimatisierungs- und Kühlsystem (100) für einen Behälter (102), der mit einer Transportkühleinheit TRU (104) ausgestattet ist, das System umfassend:
ein Gebläse (108) mit variabler Geschwindigkeit, das mit der TRU konfiguriert ist;
einen oder mehrere erste Sensoren (110-1), die an vordefinierten Positionen an einem hinteren Abschnitt (106-1) eines dem Behälter zugeordneten Konservierungsraums (106) positioniert sind, wobei der eine oder die mehreren ersten Sensoren konfiguriert sind, um ein oder mehrere erste Attribute zu überwachen, die dem hinteren Abschnitt zugeordnet sind; und
eine Steuerung (202), die mit dem einen oder den mehreren ersten Sensoren und dem Gebläse in Verbindung ist, wobei die Steuerung konfiguriert ist, um die Geschwindigkeit des Gebläses und/oder die Kühlkapazität der TRU basierend auf den überwachten ersten Attributen des hinteren Abschnitts anzupassen, um eine vordefinierte Umgebung in dem hinteren Abschnitt oder in dem gesamten Konservierungsraum aufrechtzuerhalten.

2. System (100) nach Anspruch 1, wobei das System einen oder mehrere zweite Sensoren (110-2) umfasst, die mit der Steuerung (202) in Verbindung sind und konfiguriert sind, um ein oder mehrere zweite Attribute zu überwachen, die einem oder mehreren von an einer Rücklufteinlassöffnung (104-1) der TRU (104) empfangenen Rückluft und an einer Umgebungslufteinlassöffnung (104-2) der TRU empfangenen Umgebungsluft, zugeordnet sind,
wobei die Steuerung konfiguriert ist, um die Geschwindigkeit des Gebläses (108) und/oder die Kühlkapazität der TRU basierend auf den überwachten ersten Attributen des hinteren Abschnitts (106-1) und den überwachten zweiten Attributen der Rückluft und/oder der Umgebungsluft anzupassen, um die vordefinierte Umgebung in dem gesamten Konservierungsraum (106) aufrechtzuerhalten.

3. System (100) nach einem der Ansprüche 1 und 2, wobei die Steuerung (202) betriebsmäßig mit einem Dampfkompressionssystem (112) gekoppelt ist, das der TRU (104) zugeordnet ist, wobei die Steuerung den Betrieb des Dampfkompressionssystems steuert, um die Kühlkapazität der TRU anzupassen.

4. System (100) nach einem der Ansprüche 2 und 3, wobei das eine oder die mehreren ersten und zweiten Attribute eines oder mehrere aus Temperatur, Feuchtigkeit und Luftstromgeschwindigkeit umfassen, wobei die vordefinierte Umgebung einen oder mehrere aus einem vordefinierten Temperaturbereich, einem vordefinierten Feuchtigkeitsbereich und einem vordefinierten Luftstromgeschwindigkeitsbereich umfasst.

5. System (100) nach einem der vorhergehenden Ansprüche, wobei, wenn die überwachte Temperatur des hinteren Abschnitts (106-1) den vordefinierten Temperaturbereich überschreitet und die überwachte Temperatur der Rückluft und/oder der Umgebungsluft innerhalb des vordefinierten Temperaturbereichs ist, die Steuerung (202) konfiguriert ist, um die Geschwindigkeit des Gebläses (108) zu erhöhen und/oder die Kühlleistung der TRU (104) anzupassen, um den vordefinierten Temperaturbereich an dem hinteren Abschnitt aufrechtzuerhalten.

6. System (100) nach einem der vorhergehenden Ansprüche, wobei, wenn die überwachte Temperatur der Rückluft und/oder der Umgebungsluft innerhalb des vordefinierten Temperaturbereichs ist und/oder die überwachte Temperatur des hinteren Abschnitts (106-1) innerhalb des vordefinierten Temperaturbereichs ist, die Steuerung (202) konfiguriert ist, um die Kühlleistung der TRU (104) aufrechtzuerhalten und die Geschwindigkeit des Gebläses (108) aufrechtzuerhalten, um den vordefinierten Temperaturbereich in dem gesamten Konservierungsraum (106) aufrechtzuerhalten.

7. System (100) nach einem der vorhergehenden Ansprüche, wobei der eine oder die mehreren ersten Sensoren (110-1) über und/oder innerhalb eines oder mehrerer Gehäuse angebracht sind, die ein oder mehrere Produkte in dem hinteren Bereich (106-1) des Behälters (102) lagern; und/oder
wobei der eine oder die mehreren ersten Sensoren (110-1) an einer Innenwand des Behälters (102) an dem hinteren Abschnitt (106-1) angebracht und/oder in dem Konservierungsraum (106) angeordnet sind.

8. System (100) nach einem der vorhergehenden Ansprüche, wobei die Steuerung (202) eine Steuereinheit der TRU (104) ist; oder wobei die Steuerung (202) mit einer Steuereinheit der TRU (104) in Verbindung ist.

9. System (100) nach einem der vorhergehenden Ansprüche, wobei der Behälter (102) ein Anhänger ist, der einem Fahrzeug zugeordnet ist, wobei das Fahrzeug eines oder mehrere aus einem elektrischen Lastwagen, einem halbelektrischen Lastwagen und einem nicht-elektrischen Lastwagen ist,
wobei das Gebläse (108) und die TRU (104) optional betriebsmäßig mit einer Wechselstromquelle oder einer Gleichstromquelle (116), die dem Fahrzeug zugeordnet ist, gekoppelt sind.

10. System (100) nach einem der vorhergehenden Ansprüche, wobei das System einen oder mehrere dritte Sensoren (110-3) umfasst, die an einem vorderen Abschnitt (106-2) und einem mittleren Abschnitt (106-3) des Konservierungsraums (106) positioniert sind, wobei der eine oder die mehreren ersten Sensoren (110-1) und der eine oder die mehreren dritten Sensoren konfiguriert sind, um die dem gesamten Konservierungsraum zugeordneten ersten Attribute zu überwachen.

11. Verfahren (300) zum Konditionieren eines Konservierungsraums (106) eines Behälters (102), der mit einer Transportkühleinheit TRU (104) ausgestattet ist, das Verfahren die folgenden Schritte umfassend:
Überwachen, durch einen oder mehrere erste Sensoren (110-1), eines oder mehrerer erster Attribute, die einem hinteren Abschnitt (106-1) des Konservierungsraums zugeordnet sind; und
Anpassen, durch eine Steuerung (202), der Geschwindigkeit des Gebläses mit variabler Geschwindigkeit (108), das mit der TRU konfiguriert ist und/oder Anpassen von Kühlkapazität der TRU basierend auf den überwachten ersten Attributen des hinteren Abschnitts, um eine vordefinierte Umgebung in dem hinteren Abschnitt oder in dem gesamten Konservierungsraum aufrechtzuerhalten.

12. Verfahren (300) nach Anspruch 11, wobei das Verfahren die folgenden Schritte umfasst:
Überwachen, durch einen oder mehrere zweite Sensoren (110-2), von einem oder mehreren zweiten Attributen, die einem oder mehreren von an einer Rücklufteinlassöffnung (104-1) der TRU (104) empfangenen Rückluft und an einer Umgebungslufteinlassöffnung (104-2) der TRU empfangenen Umgebungsluft zugeordnet sind; und
Anpassen, durch die Steuerung (202), der Geschwindigkeit des Gebläses (108) und/oder der Kühlkapazität der TRU basierend auf den überwachten ersten Attributen des hinteren Abschnitts und den überwachten zweiten Attributen der Rückluft und/oder der Umgebungsluft, um die vordefinierte Umgebung in dem gesamten Konservierungsraum (106) aufrechtzuerhalten.

13. Verfahren (300) nach einem der Ansprüche 11 und 12, wobei die Steuerung (202) betriebsmäßig mit einem Dampfkompressionssystem (112) gekoppelt ist, das der TRU (104) zugeordnet ist, wobei das Verfahren den Schritt eines Kontrollierens, durch die Steuerung, des Betriebs des Dampfkompressionssystems, um die Kühlkapazität der TRU anzupassen, umfasst.

14. Verfahren (300) nach einem der Ansprüche 11 bis 13, wobei das Verfahren die folgenden Schritte umfasst: Überwachen der ersten Attribute, die dem vorderen Abschnitt und dem mittleren Abschnitt des Lagerraums (106) zugeordnet sind, durch einen oder mehrere dritte Sensoren (110-3), die an einem vorderen Abschnitt (106-2) und einem mittleren Abschnitt (106-3) des Lagerraums angeordnet sind; und/oder
wobei das eine oder die mehreren ersten und zweiten Attribute eines oder mehrere aus Temperatur, Feuchtigkeit und Luftstromgeschwindigkeit umfassen, wobei die vordefinierte Umgebung einen oder mehrere aus einem vordefinierten Temperaturbereich, einem vordefinierten Feuchtigkeitsbereich und einem vordefinierten Luftstromgeschwindigkeitsbereich umfasst.

15. Verfahren (300) nach einem der Ansprüche 11 bis 14, wobei, wenn die überwachte Temperatur des hinteren Abschnitts (106-1) den vordefinierten Temperaturbereich überschreitet und die überwachte Temperatur der Rückluft und/oder der Umgebungsluft innerhalb des vordefinierten Temperaturbereichs ist, das Verfahren die Schritte eines Erhöhens der Geschwindigkeit des Gebläses (108) und/oder eines Anpassens der Kühlleistung der TRU (104), um den vordefinierten Temperaturbereich an dem hinteren Abschnitt aufrechtzuerhalten, umfasst; und/oder
wobei, wenn die überwachte Temperatur der Rückluft und/oder der Umgebungsluft innerhalb des vordefinierten Temperaturbereichs ist und/oder die überwachte Temperatur des hinteren Abschnitts (106-1) innerhalb des vordefinierten Temperaturbereichs ist, das Verfahren die Schritte eines Aufrechterhaltens der Kühlleistung der TRU (104) und eines Aufrechterhaltens der Geschwindigkeit des Gebläses, um den vordefinierten Temperaturbereich in dem gesamten Konservierungsraum (106) aufrechtzuerhalten, umfasst.

## Revendications

1. Système de climatisation et de réfrigération (100) pour un conteneur (102) équipé d'une unité de réfrigération de transport TRU (104), le système comprenant :
un ventilateur à vitesse variable (108) configuré avec le TRU ;
un ou plusieurs premiers capteurs (110-1) positionnés à des positions prédéfinies dans une section arrière (106-1) d'un espace de conservation (106) associé au conteneur, le ou les premiers capteurs sont configurés pour surveiller un ou plusieurs premiers attributs associés à la section arrière ; et
un contrôleur (202) en communication avec le ou les premiers capteurs et le ventilateur, le contrôleur étant configuré pour ajuster la vitesse du ventilateur et/ou ajuster la capacité de refroidissement du TRU sur la base des premiers attributs surveillés de la section arrière, pour maintenir un environnement prédéfini au niveau de la section arrière ou à travers l'espace de conservation.

2. Système (100) selon la revendication 1, dans lequel le système comprend un ou plusieurs deuxièmes capteurs (110-2) en communication avec le contrôleur (202) et configurés pour surveiller un ou plusieurs deuxièmes attributs associés à un ou plusieurs parmi l'air de retour reçu à un orifice d'entrée d'air de retour (104-1) du TRU (104) et l'air ambiant reçu à un orifice d'entrée d'air ambiant (104-2) du TRU,
dans lequel le contrôleur est configuré pour ajuster la vitesse du ventilateur (108) et/ou la capacité de refroidissement du TRU sur la base des premiers attributs surveillés de la section arrière (106-1) et des deuxièmes attributs surveillés de l'air de retour et/ou de l'air ambiant, pour maintenir l'environnement prédéfini à travers l'espace de conservation (106).

3. Système (100) selon l'une quelconque des revendications 1 et 2, dans lequel le contrôleur (202) est couplé de manière opérationnelle à un système de compression de vapeur (112) associé au TRU (104), dans lequel le contrôleur commande le fonctionnement du système de compression de vapeur pour ajuster la capacité de refroidissement du TRU.

4. Système (100) selon l'une quelconque des revendications 2 et 3, dans lequel le ou les premiers et deuxièmes attributs comprennent un ou plusieurs éléments parmi la température, l'humidité et le débit d'air, dans lequel l'environnement prédéfini comprend un ou plusieurs éléments parmi une plage de température prédéfinie, une plage d'humidité prédéfinie et une plage de vitesse de flux d'air prédéfinie.

5. Système (100) selon l'une quelconque des revendications précédentes, dans lequel lorsque la température surveillée de la section arrière (106-1) dépasse la plage de température prédéfinie et que la température surveillée de l'air de retour et/ou de l'air ambiant est dans la plage de température prédéfinie, le contrôleur (202) est configuré pour augmenter la vitesse du ventilateur (108) et/ou ajuster la capacité de refroidissement du TRU (104) pour maintenir la plage de température prédéfinie au niveau de la section arrière.

6. Système (100) selon l'une quelconque des revendications précédentes, dans lequel lorsque la température surveillée de l'air de retour et/ou de l'air ambiant est dans la plage de température prédéfinie et/ou que la température surveillée de la section arrière (106-1) est dans la plage de température prédéfinie, le contrôleur (202) est configuré pour maintenir la capacité de refroidissement du TRU (104) et maintenir la vitesse du ventilateur (108) pour maintenir la plage de température prédéfinie à travers l'espace de conservation (106).

7. Système (100) selon l'une quelconque des revendications précédentes, dans lequel le ou les premiers capteurs (110-1) sont installés au-dessus et/ou à l'intérieur d'une ou plusieurs boîtes stockant un ou plusieurs produits au niveau de la section arrière (106-1) du conteneur (102) ; et/ou
dans lequel le ou les premiers capteurs (110-1) sont installés sur une paroi intérieure du conteneur (102) au niveau de la section arrière (106-1) et/ou disposés dans l'espace de conservation (106).

8. Système (100) selon l'une quelconque des revendications précédentes, dans lequel le contrôleur (202) est une unité de commande du TRU (104) ; ou
dans lequel le contrôleur (202) est en communication avec une unité de commande du TRU (104).

9. Système (100) selon l'une quelconque des revendications précédentes, dans lequel le conteneur (102) est une remorque associée à un véhicule, dans lequel le véhicule étant un ou plusieurs parmi un camion électrique, un camion semi-électrique et un camion non électrique,
éventuellement dans lequel le ventilateur (108) et le TRU (104) sont couplés de manière opérationnelle à une source d'alimentation CA ou à une source d'alimentation CC (116) associée au véhicule.

10. Système (100) selon l'une quelconque des revendications précédentes, dans lequel le système comprend un ou plusieurs troisièmes capteurs (110-3) positionnés au niveau d'une section avant (106-2) et d'une section centrale (106-3) de l'espace de conservation (106), dans lequel le ou les premiers capteurs (110-1) et le ou les troisièmes capteurs surveillent sont configurés pour surveiller les premiers attributs associés à l'ensemble de l'espace de stockage.

11. Procédé (300) de conditionnement d'un espace de conservation (106) d'un conteneur (102) équipé d'une unité de réfrigération de transport TRU (104), le procédé comprenant les étapes :
de surveillance, par un ou plusieurs premiers capteurs (110-1), d'un ou plusieurs premiers attributs associés à une section arrière (106-1) de l'espace de conservation ; et
d'ajustement, par un contrôleur (202), de la vitesse d'un ventilateur à vitesse variable (108) configuré avec le TRU et/ou d'ajustement de la capacité de refroidissement du TRU sur la base des premiers attributs surveillés de la section arrière, pour maintenir un environnement prédéfini au niveau de la section arrière ou à travers l'espace de conservation.

12. Procédé (300) selon la revendication 11, dans lequel le procédé comprend les étapes de :
la surveillance, par un ou plusieurs deuxièmes capteurs (110-2), de un ou plusieurs deuxièmes attributs associés à un ou plusieurs parmi l'air de retour reçu à un orifice d'entrée d'air de retour (104-1) du TRU (104) et l'air ambiant reçu à un orifice d'entrée d'air ambiant (104-2) du TRU ; et
l'ajustement, par le contrôleur (202), de la vitesse du ventilateur (108) et/ou de la capacité de refroidissement du TRU sur la base des premiers attributs surveillés de la section arrière et des deuxièmes attributs surveillés de l'air de retour et/ou de l'air ambiant, pour maintenir l'environnement prédéfini à travers l'espace de conservation (106).

13. Procédé (300) selon l'une quelconque des revendications 11 et 12, dans lequel le contrôleur (202) est couplé de manière opérationnelle à un système de compression de vapeur (112) associé au TRU (104), dans lequel le procédé comprend l'étape de commande, par le contrôleur, du fonctionnement du système de compression de vapeur pour ajuster la capacité de refroidissement du TRU.

14. Procédé (300) selon l'une quelconque des revendications 11 à 13, dans lequel le procédé comprend les étapes de surveillance, par un ou plusieurs troisièmes capteurs (110-3) positionnés au niveau d'une section avant (106-2) et d'une section centrale (106-3) de l'espace de stockage (106), des premiers attributs associés à la section avant et à la section centrale de l'espace de stockage ; et/ou
dans lequel le ou les premiers et deuxièmes attributs comprennent un ou plusieurs éléments parmi la température, l'humidité et le débit d'air, dans lequel l'environnement prédéfini comprend un ou plusieurs éléments parmi une plage de température prédéfinie, une plage d'humidité prédéfinie et une plage de vitesse de flux d'air prédéfinie.

15. Procédé (300) selon l'une quelconque des revendications 11 à 14, dans lequel lorsque la température surveillée de la section arrière (106-1) dépasse la plage de température prédéfinie et que la température surveillée de l'air de retour et/ou de l'air ambiant est dans la plage de température prédéfinie, le procédé comprend les étapes d'augmentation de la vitesse du ventilateur (108) et/ou d'ajustement de la capacité de refroidissement du TRU (104) pour maintenir la plage de température prédéfinie au niveau de la section arrière ; et/ou
dans lequel lorsque la température surveillée de l'air de retour et/ou de l'air ambiant est dans la plage de température prédéfinie et/ou que la température surveillée de la section arrière (106-1) est dans la plage de température prédéfinie, le procédé comprend les étapes de maintien de la capacité de refroidissement du TRU (104) et de maintien de la vitesse du ventilateur pour maintenir la plage de température prédéfinie à travers l'espace de conservation (106).
